# EUROPEAN PATENT SPECIFICATION

(11) **EP 2 405 684 B1**
(45) Date of publication and mention of the grant of the patent: **13.09.2017**
(21) Application number: 11005363.4
(22) Date of filing: 30.06.2011
(51) Int. Cl.: H04W 12/06, H04L 29/06

(54) **MOBILE TERMINAL AND METHOD FOR CONTROLLING THE OPERATION OF THE MOBILE TERMINAL**
TRAGBARES ENDGERÄT UND VERFAHREN ZUR STEUERUNG DES BETRIEBS DES TRAGBAREN ENDGERÄTS
TERMINAL MOBILE ET PROCÉDÉ DE COMMANDE DU FONCTIONNEMENT DU TERMINAL MOBILE

(30) Priority: 05.07.2010 KR 20100064490
(43) Date of publication of application: 11.01.2012
(73) Proprietor: LG ELECTRONICS INC., Yeongdeungpo-gu Seoul 07336 (KR)
(72) Inventor: Han, Seohyun, Seoul 153-023 (KR); Lee, Seungmin, Seoul 153-023 (KR)
(74) Representative: Ter Meer Steinmeister & Partner

(56) References cited:
- EP-A2- 1 755 062
- US-A1- 2005 239 447
- US-A1- 2006 179 404
- US-A1- 2006 236 105

## Description

### CROSS-REFERENCE TO RELATED APPLICATION

This application claims the priority benefit of Korean Patent Application No. 10-2010-0064490, filed on July 5,2010 in the Korean Intellectual Property Office.

### BACKGROUND OF THE INVENTION

### 1. Field of the invention

The present invention relates to a mobile terminal and a method for controlling operation of the mobile terminal, and more particularly to a mobile terminal and a method for controlling operation of the mobile terminal, wherein it is possible to easily perform a user authentication process using the mobile terminal.

### 2. Description of the Related Art

Mobile terminals are portable devices, which can provide users with various services such as a voice calling service, a video calling service, an information input/output service, and a data storage service.

Document US 2006/236105 A1 discloses a method and apparatus for automatic authentication of a user, wherein a method calls for detecting an authentication event at a wireless communication device to gain access to a first wireless network through an access point associated with the first wireless network, automatically obtaining a credential from a second wireless network in response to the authentication event, and authenticating the user based on credential to establish a connection within the wireless communication device and the first wireless network.

Document EP 1 755 062 A2 discloses a method for controlling the operation of a mobile terminal, the method comprising a web page that requires input of an authentication number in order to perform a user authentication process, receiving a massage including an authentication number, and inputting the authentication number extracted from the massage to the web page in response to a specific user input.

Methods for controlling operations of a mobile terminal are also disclosed by US 2005/239447 A1 and US 2006/179404 A1.

As the types of services provided by mobile terminals diversify, an increasing number of mobile terminals have been equipped with various complicated functions such as capturing photos or moving pictures, playing music files or moving image files, providing game programs, receiving broadcast programs and providing wireless internet services and have thus evolved into multimedia players.

Using such a mobile terminal, it is possible to wirelessly connect to the Internet, perform web surfing, converse with a coworker or friend through an instant messenger, and to send mail or
check received mail.

When the user accesses a webpage using a mobile terminal, the webpage often requires that a user authentication process be performed in order to input payment information, personal information, or the like. The user authentication process using the mobile terminal is generally performed, for example, by sending a message including an authentication number to the mobile terminal, similar to Short Message Service (SMS) authentication.

However, to perform a user authentication process using a mobile terminal after accessing a webpage, the user needs to change a screen displaying the webpage to a screen for checking a received message including an authentication number and to return to the screen displaying the webpage after memorizing all digits of the authentication number and then to sequentially input the digits of the authentication number. Thus, the user authentication process using the mobile terminal causes inconvenience to the user.

In addition, in the case where there is a need to input login authentication information such as an ID and a password to a website in order to log into the website through a mobile terminal, it is difficult and takes a long time to input the login authentication information if a QWERTY keyboard cannot be used.

Accordingly, to overcome such inconvenience when performing the user authentication process and to reduce the time required to perform the user authentication process or to input login authentication information, there is a need to provide a novel method which can quickly and easily perform login authentication information input or a user authentication process using the mobile terminal.

### SUMMARY OF THE INVENTION

The present invention to provide a mobile terminal and a method for controlling operation of the mobile terminal, wherein it is possible to quickly and easily perform login authentication information input or a user authentication process using the mobile terminal.

According to an aspect of the present invention, there is provided a method for controlling operation of a mobile terminal, the method including displaying a webpage, which requires input of an authentication number in order to perform a user authentication process, on a display module, receiving a message including an authentication number upon requesting the authentication number, and inputting the authentication number extracted from the message to the webpage in response to specific user input to allow the user authentication process to be performed.

According to another aspect of the present invention, there is provided a method for controlling operation of a mobile terminal, the method including displaying a webpage that requires input of login authentication information and inputting, when the login authentication information has been stored, the stored login authentication information to the webpage in response to specific user input to allow login to a corresponding website and displaying, when the login authentication information has not been stored, an input window that enables input of the login authentication information.

According to another aspect of the present invention, there is provided a mobile terminal including a display module configured to display a webpage that requires input of an authentication number in order to perform a user authentication process, and a controller configured to input, when a message including an authentication number is received upon requesting the authentication number, the authentication number extracted from the message to the webpage in response to specific user input to allow the user authentication process to be performed.

According to another aspect of the present invention, there is provided a mobile terminal including a display module configured to display a webpage in a website that requires input of login authentication information, a memory configured to store the login authentication information, and a controller configured to input, when a message including an authentication number is received upon requesting the authentication number, the login authentication information stored in the memory to the webpage in response to specific user input to allow login to the website.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a block diagram illustrating a mobile terminal according to an embodiment of the present invention;
FIG. 2 is a front perspective view of a mobile terminal according to an embodiment of the present invention;
FIG. 3 is a rear perspective view of the mobile terminal shown in FIG. 2;
FIG. 4 is a flow chart illustrating a method for controlling the operation of a mobile terminal according to an embodiment of the present invention;
FIG. 5 is a flow chart illustrating a method for controlling the operation of a mobile terminal according to another embodiment of the present invention;
FIG. 6 illustrates an exemplary webpage screen on which it is necessary to perform a user authentication process;
FIG. 7 illustrates an exemplary message reception screen including an authentication number;
FIG. 8 illustrates an exemplary webpage screen to which an authentication number has been input; and
FIG. 9 illustrates an exemplary webpage screen on which it is necessary to input login authentication information.

### DETAILED DESCRIPTION OF THE PREFERRED EMBODIMENTS

The present invention will hereinafter be described in detail with reference to the accompanying drawings in which exemplary embodiments of the invention are shown. Further, the term 'mobile terminal' as used herein may indicate a mobile phone, a smart phone, a laptop computer, a digital broadcast receiver, a personal digital assistant (PDA), a portable multimedia player (PMP), a navigation device a tablet computer, an electronic book (e-book) reader and the live. In this disclosure, the terms 'module' and 'unit' can be used interchangeably.

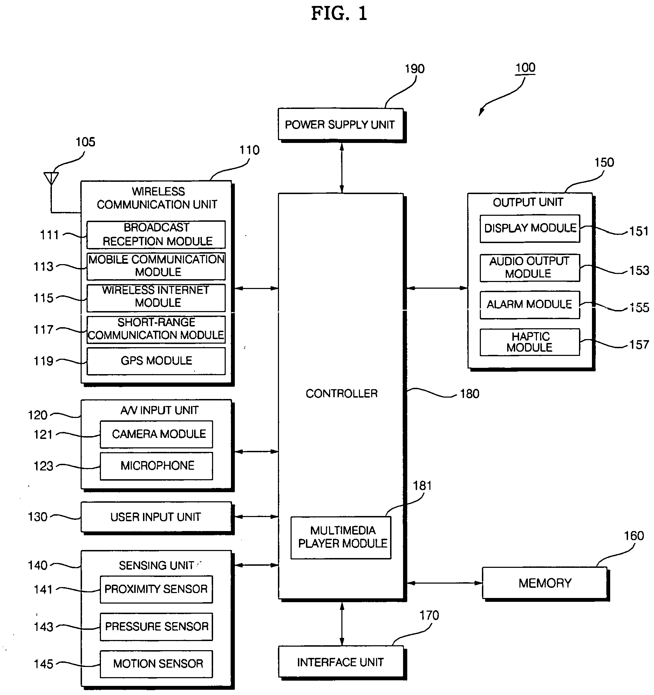

First, FIG. 1 is a block diagram illustrating a mobile terminal 100 according to an embodiment of the present invention. Referring to FIG. 1, the mobile terminal 100 includes a wireless communication unit 110, an audio/video (A/V) input unit 120, a user input unit 130, a sensing unit 140, an output unit 150, a memory 160, an interface unit 170, a controller 180, and a power supply unit 190. In addition, two or more of the elements may be combined into one element, or one element may be divided into two or more elements, if appropriate.

Further, in the embodiment in FIG. 1, the wireless communication unit 110 includes a broadcast reception module 111, a mobile communication module 113, a wireless Internet module 115, a short-range communication module 117, and a global positioning system (GPS) module 119. The broadcast reception module 111 receives broadcast signals and/or broadcast-related information from an external broadcast management server through a broadcast channel. Further, the broadcast channel may be a satellite channel or a terrestrial channel. Also, the broadcast management server may be a server which generates broadcast signals and/or broadcast-related information and transmits the generated broadcast signals and/or the generated broadcast-related information, or may be a server which receives and then transmits previously-generated broadcast signals and/or previously-generated broadcast-related information.

In addition, the broadcast-related information may include broadcast channel information, broadcast program information and/or broadcast service provider information. The broadcast signals may include a TV broadcast signal, a radio broadcast signal, a data broadcast signal, the combination of a data broadcast signal and a TV broadcast signal or the combination of a data broadcast signal and a radio broadcast signal. Further, the broadcast-related information may be provided to the mobile terminal 100 through a mobile communication network. In this instance, the broadcast-related information may be received by the mobile communication module 113, rather than by the broadcast reception module 111. The broadcast-related information may also come in various forms.

In addition, the broadcast reception module 111 can receive broadcast signals using various broadcasting systems such as the digital multimedia broadcasting-terrestrial (DMB-T) system, the digital multimedia broadcasting-satellite (DMB-S) system, the media forward link only (MediaFLO) system, the DVB-H system, and the integrated services digital broadcast-terrestrial (ISDB-T) system. In addition, the broadcast reception module 111 may be suitable not only for the above-mentioned digital broadcasting systems but also for nearly all types of broadcasting systems other than those set forth herein. The broadcast signal and/or the broadcast-related information received by the broadcast reception module 111 can also be stored in the memory 160.

In addition, the mobile communication module 113 can transmit wireless signals to or receives wireless signals from at least one of a base station, an external terminal, and a server through a mobile communication network. The wireless signals may include various types of data according to whether the mobile terminal 100 transmits/receives voice call signals, video call signals, or text/multimedia messages. Further, the wireless Internet module 115 corresponds to a module for wirelessly accessing the Internet. The wireless Internet module 115 may also be embedded in the mobile terminal 100 or may be installed in an external device. The wireless Internet module 115 may also use various wireless Internet technologies such as the wireless local area network (WLAN), Wireless Broadband (WiBro), World Interoperability for Microwave Access (Wimax), and High Speed Downlink Packet Access (HSDPA).

In addition, the short-range communication module 117 corresponds to a module for short-range communication and may use various short-range communication techniques such as Bluetooth, radio frequency identification (RFID), infrared data association (IrDA), ultra wideband (UWB), and ZigBee. Further, the GPS module 119 can receive position information from a plurality of GPS satellites. Also, the A/V input unit 120 can be used to receive audio signals or video signals, and in FIG. 1 includes a camera 121 and a microphone 123.

In more detail, the camera 121 processes various image frames such as still images or moving images captured by an image sensor during a video call mode or an image capturing mode. The image frames processed by the camera 121 can also be displayed by a display module 151 included in the output unit 150. Further, the image frames processed by the camera 121 may be stored in the memory 160 or may be transmitted to an external device through the wireless communication unit 110. The mobile terminal 100 may also include two or more cameras 121.

In addition, the microphone 123 can receive external (e.g., voice) sound signals during a call mode, a recording mode, or a voice recognition mode with the use of a microphone and can convert the sound signals into electrical sound data. In the call mode, the mobile communication module 113 converts the electrical sound data into data that can be readily transmitted to a mobile communication base station and then outputs the data obtained by the conversion. The microphone 123 may also use various noise removal algorithms to remove noise that may be generated during the reception of external sound signals.

In addition, the user input unit 130 can generate key input data based on user input for controlling the operation of the mobile terminal 100. The user input unit 130 may be implemented as a keypad, a dome switch, a touch pad (static pressure/static voltage), a jog wheel, a jog switch, etc. In particular, if the user input unit 130 is implemented as a touch pad and forms a mutual layer structure with the display module 151, the user input unit 130 and the display module 151 may be collectively referred to as a touch screen.

Further, the sensing unit 140 determines a current state of the mobile terminal 100 such as whether the mobile terminal 100 is opened or closed, the position of the mobile terminal 100 and whether the mobile terminal 100 is placed in contact with a user, and generates a sensing signal for controlling the operation of the mobile terminal 100. For example, when the mobile terminal 100 is a slider-type mobile phone, the sensing unit 140 can determine whether the mobile terminal 100 is opened or closed. In addition, the sensing unit 140 can determine whether the mobile terminal 100 is powered by the power supply unit 190 and whether the interface unit 170 is connected to an external device.

Further, in the embodiment in FIG. 1, the sensing unit 140 includes a proximity sensor 141, a pressure sensor 143 and a motion sensor 145. The proximity sensor 141 can detect an approaching object or whether there is an object nearby the mobile terminal 100 without mechanical contact. More specifically, the proximity sensor 141 can detect an approaching object based on a change in an alternating current (AC) magnetic field or a static magnetic field, or the rate of change of capacitance. The sensing unit 140 may also include two or more proximity sensors 141.

In addition, the pressure sensor 143 can determine whether pressure is being applied to the mobile terminal 100 and/or measure the level of pressure, if any, applied to the mobile terminal 100. The pressure sensor 143 may also be installed in a certain part of the mobile terminal 100 where the detection of pressure is needed. For example, the pressure sensor 143 may be installed in the display module 151. In this instance, it is possible to differentiate a typical touch input from a pressure touch input, which is generated using a higher pressure level than that used to generate a typical touch input, based on data provided by the pressure sensor 143. In addition, when a pressure touch input is received through the display module 151, it is possible to determine the level of pressure applied to the display module 151 upon the detection of a pressure touch input based on data provided by the pressure sensor 143.

Further, the motion sensor 145 can determine the location and motion of the mobile terminal 100 using an acceleration sensor or a gyro sensor. In more detail, acceleration sensors are a type of device for converting a vibration in acceleration into an electric signal. With recent developments in micro-electromechanical system (MEMS) technology, acceleration sensors have been widely used in various products for various purposes ranging from detecting large motions such as car collisions as performed in airbag systems for automobiles to detecting minute motions such as the motion of the hand as performed in gaming input devices. In general, one or more acceleration sensors representing two or three axial directions are incorporated into a single package. There are some instances when the detection of only one axial direction, for example, a Z-axis direction, is necessary. Thus, when an X- or Y-axis acceleration sensor, instead of a Z-axis acceleration sensor, is required, the X- or Y-axis acceleration sensor may be mounted on an additional substrate, and the additional substrate may be mounted on a main substrate. Further, gyro sensors are sensors for measuring angular velocity, and can determine the relative direction of the rotation of the mobile terminal 100 to a reference direction.

In addition, the output unit 150 can output audio signals, video signals and alarm signals. In the embodiment in FIG. 1, the output unit 150 includes the display module 151, an audio output module 153, an alarm module 155 and a haptic module 157. The display module 151 can display various information processed by the mobile terminal 100. For example, if the mobile terminal 100 is in a call mode, the display module 151 can display a user interface (UI) or a graphic user interface (GUI) for making or receiving a call. If the mobile terminal 100 is in a video call mode or an image capturing mode, the display module 151 can display a UI or a GUI for capturing or receiving images.

Further, if the display module 151 and the user input unit 130 form a mutual layer structure and are thus implemented as a touch screen, the display module 151 can be used as both an output device and an input device. If the display module 151 is implemented as a touch screen, the display module 151 can also include a touch screen panel and a touch screen panel controller. In more detail, the touch screen panel is a transparent panel attached onto the exterior of the mobile terminal 100 and may be connected to an internal bus of the mobile terminal 100.

The touch screen panel keeps monitoring whether the touch screen panel is being touched by the user, and once a touch input to the touch screen panel is received, the touch screen panel transmits a number of signals corresponding to the touch input to the touch screen panel controller. The touch screen panel controller then processes the signals transmitted by the touch screen panel, and transmits the processed signals to the controller 180. Then, the controller 180 determines whether a touch input has been generated and which part of the touch screen panel has been touched based on the processed signals transmitted by the touch screen panel controller.

Further, the display module 151 may include electronic paper (e-paper), which is a type of reflective display technology and can provide as high resolution as ordinary ink on paper, wide viewing angles, and excellent visual properties. E-paper can be implemented on various types of substrates such as a plastic, metallic or paper substrate and can display and maintain an image thereon even after power is cut off. In addition, e-paper can reduce the power consumption of the mobile terminal 100 because it does not require a backlight assembly. The display module 151 may be implemented as e-paper by using electrostatic-charged hemispherical twist balls, using electrophoretic deposition, or using microcapsules, for example.

In addition, the display module 151 may include at least one of a liquid crystal display (LCD), a thin film transistor (TFT)-LCD, an organic light-emitting diode (OLED), a flexible display, and a three-dimensional (3D) display. The mobile terminal 100 may also include two or more display modules 151. For example, the mobile terminal 100 may include an external display module and an internal display module.

Further, the audio output module 153 can output audio data received by the wireless communication unit 110 during a call reception mode, a call mode, a recording mode, a voice recognition mode, or a broadcast reception mode and/or output audio data present in the memory 160. In addition, the audio output module 153 can output various sound signals associated with the functions of the mobile terminal 100 such as receiving a call or a message. The audio output module 153 may also include a speaker and a buzzer.

Also, the alarm module 155 can output an alarm signal indicating the occurrence of an event in the mobile terminal 100. Examples of the event include receiving a call signal, receiving a message, and receiving a key signal. Examples of the alarm signal output by the alarm module 155 also include an audio signal, a video signal and a vibration signal. More specifically, the alarm module 155 can output an alarm signal upon receiving a call signal or a message. In addition, the alarm module 155 can receive a key signal and output an alarm signal as feedback to the key signal. Therefore, the user can easily recognize the occurrence of an event based on an alarm signal output by the alarm module 155. Further, an alarm signal for notifying the user of the occurrence of an event may be output not only by the alarm module 155, but also by the display module 151 or the audio output module 153.

In addition, the haptic module 157 can provide various haptic effects (such as vibration) that can be perceived by the user. If the haptic module 157 generates vibration as a haptic effect, the intensity and the pattern of vibration generated by the haptic module 157 may be altered in various manners. The haptic module 157 can also synthesize different vibration effects and output the result of the synthesization. Alternatively, the haptic module 157 can sequertially output different vibration effects. Further, the haptic module 157 may provide various haptic effects other than vibration such as a haptic effect obtained using a pin array that moves perpendicularly to a contact skin surface, a haptic effect obtained by injecting or sucking in air through an injection hole or a suction hole, a haptic effect obtained by giving a stimulus to the surface of the skin, a haptic effect obtained through contact with an electrode, a haptic effect obtained using an electrostatic force, and a haptic effect obtained by realizing the sense of heat or cold using a device capable of absorbing heat or generating heat. The haptic module 157 may also be configured to enable the user to recognize a haptic effect using the kinesthetic sense of the fingers or the arms. Also, the mobile terminal 100 may include two or more haptic modules 157.

In addition, the memory 160 can store various programs used for the operation of the controller 180, and temporarily store various data such as a list of contacts, messages, still images, or moving images. The memory 160 may include at least one of a flash memory type storage medium, a hard disk type storage medium, a multimedia card micro type storage medium, a card type memory (e.g., a secure digital (SD) or extreme digital (XD) memory), a random access memory (RAM), and a read-only memory (ROM). The mobile terminal 100 can also operate a web storage on the Internet, which performs the functions of the memory 160.

Further, the interface unit 170 interfaces with an external device that can be connected to the mobile terminal 100. In more detail, the interface unit 170 may be a wired/wireless headset, an external battery charger, a wired/wireless data port, a card socket for, for example, a memory card, a subscriber identification module (SIM) card or a user identity module (UIM) card, an audio input/output (I/O) terminal, a video I/O terminal, or an earphone. The interface unit 170 can also receive data from an external device or be powered by an external device, and transmit data provided by an external device to other components in the mobile terminal 100 or transmit data provided by other components in the mobile terminal 100 to an external device. In addition, when the mobile terminal 100 is connected to an external cradle, the interface unit 170 provides a path for supplying power from the external cradle to the mobile terminal 100 or for transmitting various signals from the external cradle to the mobile terminal 100.

Further, the controller 180 controls the general operations of the mobile terminal 100. For example, the controller 180 can perform various control operations regarding making/receiving a voice call, transmitting/receiving data, or making/receiving a video call. In FIG. 1, the controller 180 also includes a multimedia player module 181, which plays multimedia data. The multimedia player module 181 may be implemented as a hardware device and may be installed in the controller 180. Alternatively, the multimedia player module 181 may be implemented as a software program.

In addition, the power supply unit 190 may be supplied with power by an external power source or an internal power source and supply power to the other components in the mobile terminal 100. The mobile terminal 100 may include a wired/wireless communication system or a satellite communication system and thus can operate in a communication system capable of transmitting data in units of frames or packets.

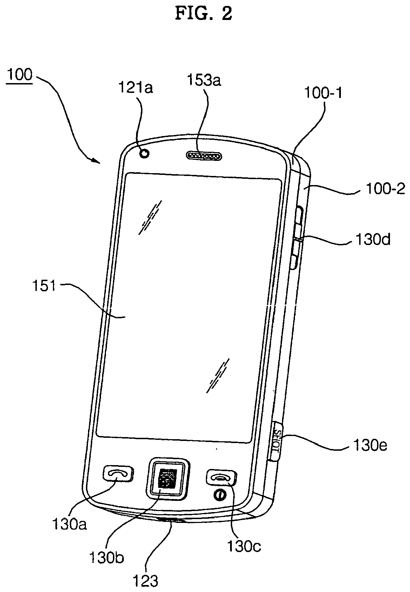

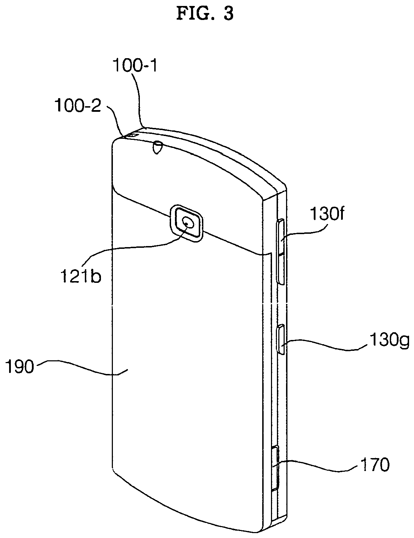

FIG. 2 is a front perspective view of a mobile terminal according to an embodiment of the present invention and FIG. 3 is a rear perspective view of the mobile terminal shown in FIG. 2 In the following, the mobile terminal according to the present invention is described with reference to FIGS. 2 and 3, from the viewpoint of external components of the mobile terminal. For ease of explanation, the following description will be given with reference to a bar type mobile terminal having a front touch screen as an example among various types of mobile terminals such as folding, bar, swing, and slider types. However, the present invention is not limited to the bar type mobile terminal and can be applied to any type of mobile terminal including the types described above.

As shown in FIG. 2, a case defining the external appearance of the mobile terminal 100 includes a front case 100-1 and a rear case 100-2. A variety of electronic parts is provided in a space defined within the front and rear cases 100-1 and 100-2. The front case 100-1 and the rear case 100-2 may be formed through synthetic resin injection molding or may be formed of a metal material such as stainless steel (STS) or titanium (Ti).

The display module 151, a first audio output module 153a, a first camera 121a, and first to third user input modules 130a, 130b, and 130c may be disposed in the main body of the mobile terminal 100, particularly, in the front case 100-1. A fourth user input module 130d, a fifth user input module 130e, and the microphone 123 may be disposed on side surfaces of the rear case 100-2.

The display module 151 may include a touchpad formed in a layered structure overlapping the display unit 151 such that the display unit 151 operates as a touch screen allowing the user to input information through touch.

The first audio output module 153a may be implemented in a receiver or speaker form. The first camera 121a may be implemented to be suitable for capturing a still or moving image of the user or the like. The microphone 123 may be implemented in a form suitable for receiving sound such as user voice.

The first to fifth user input units 130a, 130b, 130c, 130d, and 130e and sixth and seventh user input units 130f and 130g, which are described later, may be collectively referred to as a "user input unit 130". The user input unit 130 may be of any type, provided that the user input unit 130 is operated in a tactile manner such that it is operated through tactile interaction with the user.

For example, the user input unit 130 may be implemented as a dome switch or a touchpad that can receive a command or information through a push or touch operation by the user. The user input unit 130 may also be implemented as a jog wheel or a joystick. In terms of functionality, the first to third user input units 130a, 130b, and 130c allow the user to input a command such as start, end, or scroll and the fourth user input unit 130d allows the user to select an operating mode of the mobile terminal 100. The fifth user input unit 130e may function as a hot key for activating a special function of the mobile terminal 100.

As shown in FIG. 3, a second camera 121b may be additionally provided on a rear surface of the rear case 100-2 and the sixth and seventh user input units 130f and 130g and an interface unit 170 may be provided at a side surface of the rear case 100-2.

The second camera 121b may have a capture direction substantially opposite to that of the first camera 121a and have a different pixel resolution from that of the first camera 121a. A flash lamp (not shown) and a mirror (not shown) may be additionally provided on the mobile terminal 100 near the second camera 121b. The flash lamp shines light toward a subject when the subject is captured using the second camera 121b. The mirror allows the user to view their face or the like when capturing an image of themselves using the second camera 121b (i.e., in the case of self-shooting).

A second audio output module (not shown) may be additionally provided on the rear case 100-2. The second audio output module may implement a stereo function in conjunction with the first audio output module 153a and may be used to perform voice or video communication in a speakerphone mode.

The interface unit 170 may serve as a passage for exchanging data with an external device. An antenna for receiving broadcast signals (not shown) in addition to an antenna for communication may be provided on the front case 100-1 and the rear case 100-2 at portions thereof. Each antenna may be mounted to be retractable from the rear case 100-2.

A power supply unit 190 for supplying power to the mobile terminal 100 may be provided on the rear case 100-2. The power supply unit 190 is, for example, a rechargeable battery which is detachably mounted to the rear case 100-2 for the purpose of recharging or the like.

Although the above description has been given with reference to an example where the second camera 121b is provided on the rear case 100-2, the present invention is not limited to this example. When the second camera 121b is not provided, the first camera 121a may be formed to be rotatable so as to enable capturing in the same capture direction as that of the second camera 121b.

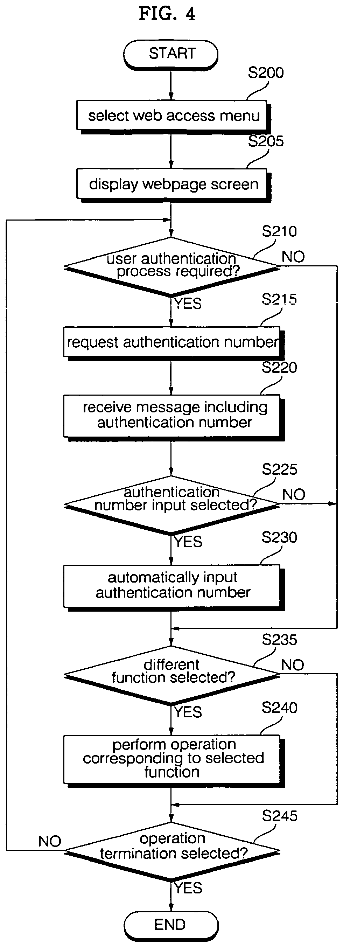

FIG. 4 is a flow chart illustrating a method for controlling the operation of a mobile terminal according to an embodiment of the present invention.

As shown in FIG. 4, when a web access menu is selected according to user input (S200), the controller 180 activates a web browser and performs a control operation for accessing a specified webpage through the wireless Internet module 115. Accordingly, a webpage screen, on which the accessed webpage is displayed, is displayed on the display module 151 (S205).

When there is a need to perform an authentication process by inputting an authentication number on the webpage screen displayed on the display module 151 (S210), the controller 180 requests an authentication number from the accessed webpage when the user has selected an authentication number request icon on the webpage screen (S215). A callback number, user information, and the like may be additionally input when requesting the authentication number.

In response to the authentication number request, the controller 180 receives a message including the authentication number from a communication company or a website that provides authentication services (S220). Upon receiving the message including the authentication number, the controller 180 may switch the webpage screen to a new screen and display the received message on the new screen. Alternatively, the controller 180 may display a message reception notification popup window, a message reception notification icon, or the like, which indicates that the message including the authentication number has been received, on a portion of the webpage screen.

When a preset key is input or an indicator such as a notification message or icon is touched through the user input unit 130 (S225), the controller 180 extracts the authentication number from the received message and automatically inputs the extracted authentication number to the webpage (S230). This allows the user authentication process to be performed. That is, the user may allow the authentication number included in the message to be automatically input to the webpage, for example, by inputting the preset key or touching the notification message or icon.

The controller 180 may be configured so as to delete the message including the authentication number after receiving the message. When inputting the authentication number extracted from the received message, the controller 180 may additionally perform a process for asking for a password preset by the user to prevent unauthorized use by another user.

When a different function such as a function to move the webpage screen or a function to display another webpage screen is selected while the webpage is displayed (S235), the controller 180 performs an operation corresponding to the selected function (S240).

The above procedure is repeated until operation termination is selected (S245). In the above procedure, the authentication number included in the received message is automatically input to the webpage that requires an authentication process and therefore it is possible to alleviate the inconvenience of the user having to manually input all digits of the authentication number after reading the received message.

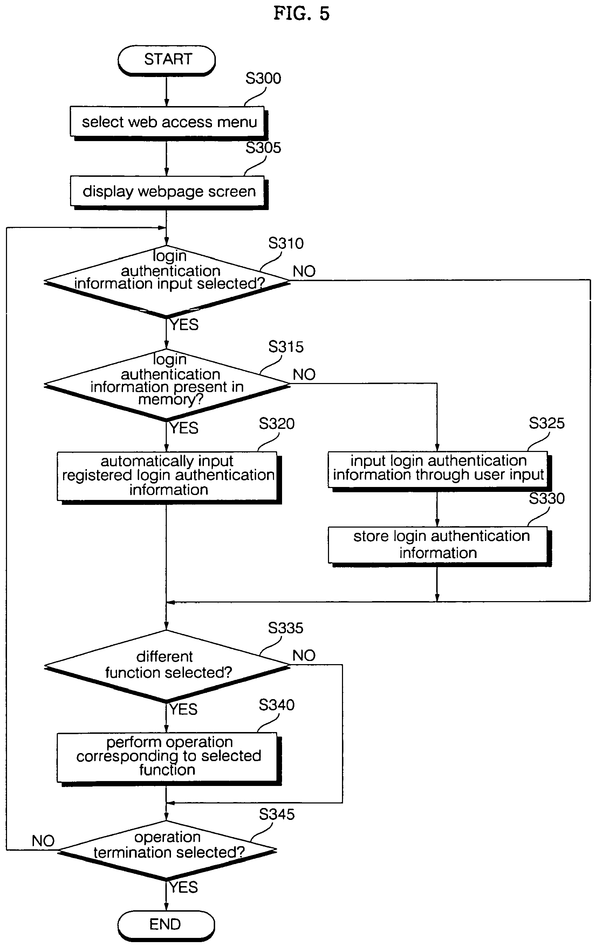

FIG. 5 is a flow chart illustrating a method for controlling the operation of a mobile terminal according to another embodiment of the present invention.

In this embodiment, a procedure of steps S300 and S305 in which a webpage screen is displayed according to a user command or the like and a procedure of steps S335 to S345 in which an operation corresponding to a different function selected by the user is performed and the procedure of steps S310 to S340 is repeated until operation termination is selected are similar to the corresponding procedures of the embodiment of FIG. 4 described above.

However, in this embodiment, when input of login authentication information including an ID and a password is selected on a webpage screen displayed on the display module 151 (S315), the controller 180 determines whether or not login authentication information has been stored in the memory 160 (S315) and reads the stored login authentication information, upon determining that the login authentication information has been stored in the memory 160, and automatically inputs the read login authentication information to the webpage (S320). It is possible to log into a specific website by inputting the login authentication information in this manner. The controller 180 may be configured such that a preset webpage or a preset webpage region on a webpage screen provided by the specific website is displayed first after logging into the specific website.

A login registration menu may be provided in order to store the login authentication information. Different login authentication information may be stored for each website such that different login authentication information is input for each website accessed.

Upon determining that login authentication information has not been stored in the memory 160 (S315), the controller 180 displays an input window that enables input of login authentication information and performs a login process according to login authentication information input by the user (S325). This input login authentication information is stored in the memory 160 so that the input login authentication information can be used upon next login (S330). Here, the login authentication information may be stored after being encrypted to protect the login authentication information.

The above procedure allows the user to log into a specific website without manually inputting login authentication information such as an ID and a password.

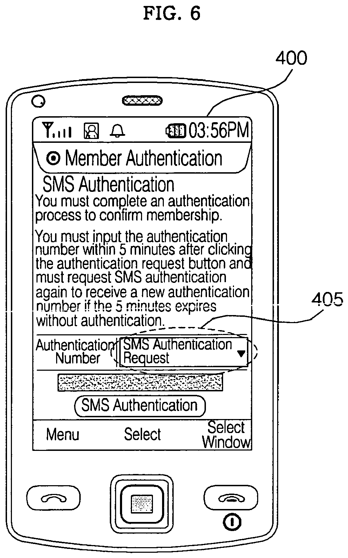

FIGS. 6 to 9 illustrate screens displayed on a display module in a method for controlling the operation of a mobile terminal according to an embodiment of the present invention.

First, FIG. 6 illustrates an exemplary webpage screen on which it is necessary to perform a user authentication process. A webpage screen 400, on which it is necessary to perform a user authentication process by inputting an authentication number in order to allow the user to input payment information or to input or modify personal information, may be provided as shown in FIG. 6.

When an 'SMS authentication request' button 405 is selected on the webpage screen 400, a message including an authentication number is received from a website or a communication company that provides an authentication service.

In the case where the user receives a message including an authentication number through the mobile terminal 100 after connecting to the webpage through a computer or the like, the user can enter the authentication number while viewing content of the message displayed on the mobile terminal 100 without significant inconvenience.

However, in the case where the user receives a message including an authentication number through the mobile terminal 100 after connecting to the webpage through the mobile terminal 100, the user needs to change the webpage screen to a screen for checking the authentication number, change back to the webpage screen after memorizing the authentication number, and then input the memorized authentication number to the webpage screen. Accordingly, it takes a long time to input the authentication number and it is also not easy to input the authentication number when a QWERTY keyboard or the like is not available.

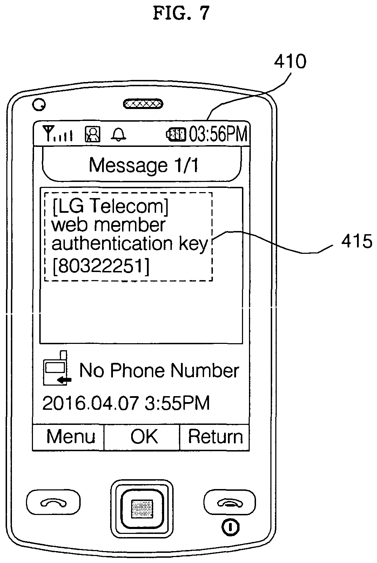

FIG. 7 illustrates an exemplary message reception screen including an authentication number. An authentication number 415 is displayed on the message reception screen 410. Generally, the user needs to memorize the authentication number 415 and then to manually input all digits of the memorized authentication number to the original webpage screen 400 in order to perform a user authentication process.

However, in the present invention, the authentication number may be automatically input when a specific key or a specific icon is touched on the message reception screen 410. In an alternative embodiment, an indicator such as an icon or a popup window or a notification message indicating receipt of the message may be displayed on a portion of the original webpage screen 400 without displaying the message reception screen 410 and the authentication number may then be automatically input when the indicator is touched.

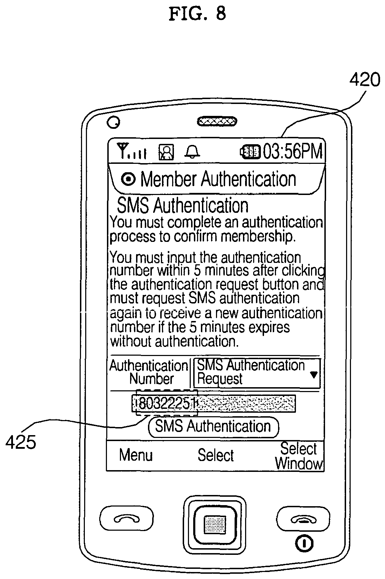

FIG. 8 illustrates an exemplary webpage screen to which an authentication number has been input. When an indicator indicating receipt of a message is touched or a specific key is input on a message reception screen including an authentication number, an authentication number 425 is automatically input to a webpage screen 420 to perform a user authentication process.

The user authentication process is performed when the authentication number 425 has been input in this manner. Depending on settings, the user authentication process may be performed when the user makes an additional confirmation input after inputting the authentication number 425.

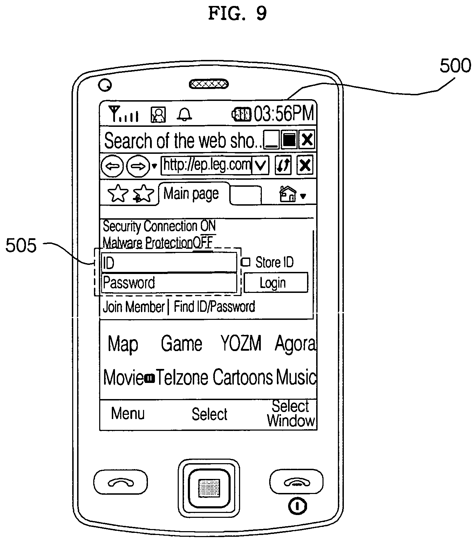

FIG. 9 illustrates an exemplary webpage screen on which it is necessary to input login authentication information. As shown in FIG. 9, in the case where login authentication information such as an ID and a password needs to be input to a webpage screen 500, stored login authentication information may be automatically input to allow login when a preset key is input or when a region 505, through which login authentication information is input, is touched.

Depending on a usage environment, a message "Do you want to use a function to input login authentication information through specific key input?" may be displayed on a popup window or the like when the region 505 is touched or when the region 505 is clicked after locating a pointer at the region 505 and the login authentication information may then be automatically input when the user has chosen to use the function.

In addition, in the case where login authentication information has not been stored, an input window that enables input of login authentication information may be displayed and login authentication information input through the input window may be stored to be used upon next login.

The mobile terminal and the method for controlling operation of the same according to the present invention are not limited in application to the configurations and methods of the embodiments described above and all or some of the embodiments may be selectively combined to implement various modifications.

The method for controlling the operation of a mobile terminal according to the present invention can be embodied as processor readable code stored in a processor readable medium provided in the mobile terminal. The processor readable medium includes any type of storage device that stores data which can be read by a processor. Examples of the processor readable medium include Read-Only Memory (ROM), Random-Access Memory (RAM), CD-ROMs, magnetic tapes, floppy disks, optical data storage devices, and so on. The processor readable medium can also be embodied in the form of carrier waves such as signals transmitted over the Internet. The processor readable medium can also be distributed over a network of coupled processor systems so that the processor readable code is stored and executed in a distributed fashion.

As is apparent from the above description, a mobile terminal and a method for controlling operation of the same according to the present invention have a variety of advantages. For example, when a user authentication process is performed using a mobile terminal after accessing a webpage in a website that requires input of an authentication number in order to perform the user authentication process, an authentication number included in a received message may be automatically input to the webpage. Login authentication information stored in the website may also be automatically input to the webpage to allow login to the website. Accordingly, it is possible to quickly and easily perform login authentication information input or the user authentication process using the mobile terminal.

## Claims

1. A method for controlling operation of a mobile terminal, the method comprising:
displaying (S205) a first webpage screen that requires input of an authentication number in order to perform a user authentication process;
receiving (S220) a message including an authentication number in response to a request to receive the authentication number;
displaying an indicator indicating a receipt of the message at a portion of the first webpage screen;
extracting the authentication number from the received message in response to a specific user input (S225) to allow the user authentication process to be performed; the specific user input being an input of touching the indicator indicating receipt of the message;
automatically inputting (S230) the extracted authentication number to the first webpage screen;
automatically inputting on a second webpage screen a preset password when the extracted authentication number is input;
performing the user authentication process based on the automatically input authentication number; and
automatically deleting the received message after inputting the extracted authentication number to the first webpage screen.

2. The method according to claim 1, wherein the indicator is any one of an icon, a popup window and a notification message.

3. The method according to claim 1, further comprising displaying a message reception screen and displaying the content of the received message on the message reception screen.

4. The method according to claim 1, wherein the request is received based on a selection of a specific icon on the webpage screen.

5. A mobile terminal (100) comprising:
a display module (151) configured to display a first webpage screen that requires input of an authentication number in order to perform a user authentication process; and
a controller (180) configured to:
receive a message including an authentication number in response to a request to receive the authentication number;
control the display module to display an indicator indicating a receipt of the message at a portion of the first webpage screen;
automatically input on a second webpage screen a preset password to the mobile terminal when the extracted authentication number is input;
extract the authentication number from the received message in response to a specific user input to allow the user authentication process to be performed, the specific user input being an input of touching the indicator indicating receipt of the message;
automatically input the extracted authentication number to the first webpage screen;
perform the user authentication process based on the automatically input authentication number; and
automatically delete the received message after inputting the extracted authentication number to the first webpage screen.

## Patentansprüche

1. Verfahren zur Steuerung des Betriebs eines tragbaren Endgeräts, wobei das Verfahren aufweist:
Anzeigen (S205) eines ersten Webseitenbildschirms, der die Eingabe einer Authentifizierungsnummer erfordert, um einen Benutzerauthentifizierungsprozess durchzuführen;
Empfangen (S220) einer Nachricht, die eine Authentifizierungsnummer enthält, in Antwort auf eine Anforderung zum Empfangen der Authentifizierungsnummer;
Anzeigen eines Hinweises, der einen Empfang der Nachricht auf einem Teil des ersten Webseitenbildschirms anzeigt;
Extrahieren der Authentifizierungsnummer aus der empfangenen Nachricht in Antwort auf eine spezifische Benutzereingabe (S225), um zu erlauben, dass der Benutzerauthentifizierungsprozess durchgeführt wird; wobei die spezifische Benutzereingabe eine Eingabe des Berührens des Hinweises ist, der den Empfang der Nachricht anzeigt;
automatisches Eingeben (S230) der extrahierten Authentifizierungsnummer in den ersten Webseitenbildschirm;
automatisches Eingeben, auf einem zweiten Webseitenbildschirm, eines voreingestellten Passworts, wenn die extrahierte Authentifizierungsnummer eingegeben wird;
Durchführen des Benutzerauthentifizierungsprozesses basierend auf der automatisch eingegebenen Authentifizierungsnummer; und
Automatisches Löschen der empfangenen Nachricht, nach der Eingabe der extrahierten Authentifizierungsnummer in den ersten Webseitenbildschirm.

2. Verfahren nach Anspruch 1, wobei der Hinweis irgendeines von einem Symbol, einem Popup-Fenster, und einer Benachrichtigungsmeldung ist.

3. Verfahren nach Anspruch 1, ferner aufweisend ein Anzeigen eines Nachrichtenempfangsbildschirms und Anzeigen des Inhalts der empfangenen Nachricht auf dem Nachrichtenempfangsbildschirm.

4. Verfahren nach Anspruch 1, wobei die Anforderung basierend auf einer Auswahl eines spezifischen Symbols auf dem Webseitenbildschirm empfangen wird.

5. Tragbares Endgerät (100), aufweisend:
ein Anzeigemodul (151), das konfiguriert ist, einen ersten Webseitenbildschirm anzuzeigen, der die Eingabe einer Authentifizierungsnummer erfordert, um einen Benutzerauthentifizierungsprozess durchzuführen; und
eine Steuerung (180), die konfiguriert ist zum:
Empfangen einer Nachricht mit einer Authentifizierungsnummer in Antwort auf eine Anforderung zum Empfangen der Authentifizierungsnummer;
Steuern des Anzeigemoduls, eine Anzeige anzuzeigen, die einen Empfang der Nachricht auf einem Teil des ersten Webseitenbildschirms anzeigt;
automatischen Eingeben, auf einem zweiten Webseitenbildschirm, eines voreingestellten Passworts in das tragbare Endgerät, wenn die extrahierte Authentifizierungsnummer eingegeben wird;
Extrahieren der Authentifizierungsnummer aus der empfangenen Nachricht in Antwort auf eine spezifische Benutzereingabe, um zu erlauben, dass der Benutzerauthentifizierungsprozess durchgeführt wird, wobei die spezifische Benutzereingabe eine Eingabe des Berührens des Hinweises ist, der den Empfang der Nachricht anzeigt;
automatisches Eingeben der extrahierten Authentifizierungsnummer in den ersten Webseitenbildschirm;
Durchführen des Benutzerauthentifizierungsprozesses basierend auf der automatisch eingegebenen Authentifizierungsnummer; und
automatisches Löschen der empfangenen Nachricht, nach der Eingabe der extrahierten Authentifizierungsnummer in den ersten Webseitenbildschirm.

## Revendications

1. Procédé de commande du fonctionnement d'un terminal mobile, le procédé comprenant :
l'affichage (S205) d'un premier écran de page Web nécessitant une saisie d'un numéro d'authentification pour effectuer un processus d'authentification d'utilisateur ;
la réception (S220) d'un message comprenant un numéro d'authentification en réponse à une demande pour recevoir le numéro d'authentification ;
l'affichage d'un indicateur indiquant une réception du message à une portion du premier écran de page Web ;
l'extraction du numéro d'authentification du message reçu en réponse à une entrée d'utilisateur spécifique (S225) pour permettre l'exécution du processus d'authentification d'utilisateur ; l'entrée d'utilisateur spécifique étant une entrée consistant à toucher l'indicateur indiquant la réception du message ;
la saisie automatique (S230) du numéro d'authentification extrait au premier écran de page Web ;
la saisie automatique, à un deuxième écran de page Web, d'un mot de passe préréglé lorsque le numéro d'authentification extrait est saisi ;
l'exécution du processus d'authentification d'utilisateur sur la base du numéro d'authentification automatiquement saisi ; et
la suppression automatique du message reçu après la saisie du numéro d'authentification extrait au premier écran de page Web.

2. Procédé selon la revendication 1, dans lequel l'indicateur est l'un d'une icône, d'une fenêtre contextuelle et d'un message de notification.

3. Procédé selon la revendication 1, comprenant en outre l'affichage d'un écran de réception de message et l'affichage du contenu du message reçu à l'écran de réception de message.

4. Procédé selon la revendication 1, dans lequel la demande est reçue sur la base d'une sélection d'une icône spécifique à l'écran de page Web.

5. Terminal mobile (100) comprenant :
un module d'affichage (151) configuré pour effectuer l'affichage d'un premier écran de page Web nécessitant une saisie d'un numéro d'authentification pour effectuer un processus d'authentification d'utilisateur ; et
un organe de commande (180) configuré pour effectuer :
la réception d'un message comprenant un numéro d'authentification en réponse à une demande pour recevoir le numéro d'authentification ;
la commande au module d'affichage d'effectuer l'affichage d'un indicateur indiquant une réception du message à une portion du premier écran de page Web ;
la saisie automatique, à un deuxième écran de page Web, d'un mot de passe préréglé au terminal mobile lorsque le numéro d'authentification extrait est saisi ;
l'extraction du numéro d'authentification du message reçu en réponse à une entrée d'utilisateur spécifique pour permettre l'exécution du processus d'authentification d'utilisateur, l'entrée d'utilisateur spécifique étant une entrée consistant à toucher l'indicateur indiquant la réception du message ;
la saisie automatique du numéro d'authentification extrait au premier écran de page Web ;
l'exécution du processus d'authentification d'utilisateur sur la base du numéro d'authentification automatiquement saisi ; et
la suppression automatique du message reçu après la saisie du numéro d'authentification extrait au premier écran de page Web.
